# EUROPÄISCHE PATENTSCHRIFT

(11) **EP 1 646 535 B1**
(45) Veröffentlichungstag und Bekanntmachung des Hinweises auf die Patenterteilung: **18.04.2007**
(21) Anmeldenummer: 04738893.9
(22) Anmeldetag: 08.07.2004
(51) Int. Cl.: B60R 21/01, G01P 15/135, G01L 19/00

(54) **VORRICHTUNG ZUR SEITENAUFPRALLERKENNUNG UND DRUCKSENSOR**
DEVICE FOR SIDE IMPACT RECOGNITION AND PRESSURE SENSOR
DISPOSITIF POUR IDENTIFIER UNE COLLISION LATERALE ET CAPTEUR DE PRESSION

(30) Priorität: 15.07.2003 DE 10331964
(43) Veröffentlichungstag der Anmeldung: 19.04.2006
(73) Patentinhaber: ROBERT BOSCH GMBH, 70442 Stuttgart (DE)
(72) Erfinder: WELLHOEFER, Matthias, 71701 Schwieberdingen (DE); FRESE, Volker, 71701 Schwieberdingen (DE)
(86) Internationale Anmeldenummer: PCT/DE2004/001477
(87) Internationale Veröffentlichungsnummer: WO 2005/007465

(56) Entgegenhaltungen:
- EP-A- 0 882 988
- EP-A- 0 997 349
- DE-A- 4 410 794
- DE-A- 19 626 083
- DE-A- 19 858 760
- US-A- 5 793 005

## Beschreibung

### Stand der Technik

Die Erfindung geht aus von einer Vorrichtung zur Seitenaufprallerkennung bzw. einem Drucksensor nach der Gattung der unabhängigen Patentansprüche.

Aus DE 101 44 266 C1 ist eine Vorrichtung zur Seitenaufprallerkennung in einem Fahrzeug bekannt. Dabei wird der Seitenaufprall mittels eines Drucksensors erkannt, der in einem Seitenteil eines Fahrzeugs angeordnet ist. Dieser Drucksensor reagiert beim Seitenaufprall auf einen durch den Seitenaufprall entstehenden adiabatischen Druckanstieg. Für die Seitenaufprallsensierung ist ein Plausibilitätssensor unerlässlich. Dazu wird entweder ein Beschleunigungssensor, beispielsweise in der B-Säule, vorgeschlagen oder auch ein Lautsprecher, der sich im Seitenteil selbst befindet.

Aus DE 198 58 760 A ist es bekannt, dass ein Beschleunigungssensor, eine Auswerteeinheit und ein Drucksensor, der zur Seitenaufprallsensierung dient, in einem gemeinsamen Gehäuse angeordnet sein können. Der Beschleunigungssensor dient dabei als Plausibilitätssensor. Aus EP 0 997 349 A ist ein elektromechanischer Beschleunigungsschalter bekannt, der in einem Zündkreis für Insassenschutzmittel angeordnet ist. Unter Einwirkung einer Beschleunigung schließt dieser elektromagnetische Beschleunigungsschalter und wirkt als Plausibilitätssensor zu einem weiteren Beschleunigungssensor 10, dessen Signal von einer Steuerschaltung ausgewertet wird. Aus US 5,793,005 A ist ein Kollisions-Detektionsapparat bekannt, der ein Paar eines Deformationssensors und eines Beschleunigungssensors aufweist. Der Beschleunigungssensor ist vom Federmassetyp. Aus DE 44 10 794 A ist ein barometrisches Meßsystem bekannt, wobei Luftdruckanzeigen unter Berücksichtigung einer Größe von Beschleunigungen erzeugt werden, wobei die Beschleunigung durch eine Beschleunigungssensoreinrichtung erfasst wird.

### Vorteile der Erfindung

Die erfindungsgemäße Vorrichtung zur Seitenaufprallerkennung bzw. der erfindungsgemäße Drucksensor mit den Merkmalen der unabhängigen Patentansprüche haben demgegenüber den Vorteil, dass der Plausibilitätssensor nunmehr als Schalter konfiguriert ist, der im Gehäuse des Drucksensors angeordnet ist. Damit ist bereits in einer Einheit der Drucksensor und der Plausibilitätssensor angeordnet und kann so Raum sparend und Kabel sparend im Fahrzeug untergebracht werden. Ein Schalter als Plausibilitätssensor hat den Vorteil, dass er als Plausibilitätssignal seinen Zustand angibt, also, ob er geöffnet ist oder nicht. Dies entspricht dem Informationsgehalt von lediglich einem Bit. Damit spart dies, beispielsweise im Vergleich zu einem Beschleunigungssensor, erheblich an Übertragungsbandbreite. Weiterhin ist ein Schalter ein sehr zuverlässiges

Sensierungselement, das kostengünstig hergestellt werden kann. Ebenso kann der Schalter flexibel angeordnet werden, je nach Bedarf und den Gegebenheiten.

Durch die in den abhängigen Ansprüchen aufgeführten Maßnahmen und Weiterbildungen sind vorteilhafte Verbesserungen der im unabhängigen Patentanspruch angegebenen Vorrichtung zur Seitenaufprallerkennung bzw. des Drucksensors möglich.

Der Schalter kann verschieden ausgeführt sein; a) Hamlinschalter, b) micromechanischer Beschleunigungsschalter, c) piezoelektrischer Beschleunigungsschalter.

Weiterhin ist es von Vorteil, dass der Schalter ein so genannter Hamlinschalter ist, der äußerst zuverlässig arbeitet und in der Airbagelektronik bereits im Zentralsteuergerät weite Verbreitung als Plausibilitätssensor gefunden hat.

Ein Hamlinschalter besteht aus einem Permanentmagnetring, der auf einer (Kunststoff-)Führung aufgebracht ist. Im Inneren der Führung befindet sich ein Schalter aus 2 Metallkontakten. Der Permanentmagnet ist beweglich auf der Führung und wird von einer Feder, die sich ebenfalls auf der Führung befindet, am Rand der Führung gehalten. Bei einer Beschleunigung wird der Permanentmagnet auf der Führung bewegt, über den Kontakt geschoben und schließt diesen magnetisch für die Dauer der wirkenden Beschleunigung, die den Magneten entgegen der Federkraft über dem Kontakt hält. Durch die Feder wird der Magnet wieder in die stabile Ausgangsposition zurückgebracht, falls die Beschleunigung nicht mehr auf den Magneten wirkt - der Schalter ist wieder geöffnet.

Außer einem Hamlinschalter sind auch andere mechanische Schalter möglich.

Weiterhin ist es von Vorteil, dass der Schalter unmittelbar mit der Zündendstufe derart verbunden ist, dass der Schalter in Abhängigkeit von seinem Zustand die Zündendstufe freigibt. Auch dies vereinfacht die Verarbeitung des Plausibilitätssignals, da hier direkt die Zündendstufe aktiviert wird, ohne dass der Prozessor beispielsweise im Airbagsteuergerät das zentral im Fahrzeugtunnel angeordnet ist, das Plausibilitätssignal bearbeiten muss. Alternativ ist es jedoch möglich, dass der Prozessor selbst dieses Plausibilitätssignal, das wie oben dargestellt aus lediglich einem Bit besteht, auswertet. Dieses eine Bit stellt dann ein Flag dar. Der Prozessor steuert dann in Abhängigkeit von diesem Signal die Zündendstufe an.

Von Vorteil ist, daß die Schalterstellung (1Bit) mit im Drucksignal codiert wird und somit zusätzliche Leitungen für den Schalter zum Steuergerät eingepart werden können

Schließlich ist es auch von Vorteil, dass der Schalter derart angeordnet ist, dass er in Abhängigkeit von seinem Zustand direkt die Datenübertragung vom Drucksensor zum Prozessor, beispielsweise im Airbagsteuergerät oder in einem anderen Steuergerät in Abhängigkeit von seinem Zustand unterbricht. Lediglich, wenn der Schalter anzeigt, dass ein Aufprall vorliegt, in dem er beispielsweise geschlossen ist, dann wird der Schalter geschlossen, und die Daten vom Drucksensor können zum Airbagsteuergerät zur Verarbeitung übertragen werden. Auch dies spart Rechenkapazität im Airbagsteuergerät und ist auf eine einfache Art und Weise als Plausibilitätssignal zu nutzen.

Es ist möglich, dass mehr als ein Plausibilitätssensor verwendet wird, um ein Signal eines Drucksensors zu plausibilisieren. Beispielsweise kann neben dem Schalter auch noch ein Beschleunigungssensor verwendet werden, um bei verschiedenen Crashtypen ein Plausibilisierungssignal zu erzeugen. Es ist auch möglich, dass mehr als ein mechanischer Schalter einem Drucksensor zugeordnet ist.

### Zeichnung

Ausführungsbeispiele der Erfindung sind in der Zeichnung dargestellt und werden in der nachfolgenden Beschreibung näher erläutert.

Es zeigen
Figur 1 ein erstes Blockschaltbild der erfindungsgemäßen Vorrichtung,
Figur 2 ein zweites Blockschaltbild der erfindungsgemäßen Vorrichtung,
Figur 3 ein drittes Blockschaltbild der erfindungsgemäßen Vorrichtung und
Figur 4 ein viertes Blockschaltbild der erfindungsgemäßen Vorrichtung.

### Beschreibung

Zunehmend wird zur Seitenaufprallsensierung ein Drucksensor verwendet, der im Seitenteil eines Fahrzeugs angeordnet ist. Entscheidend für die Performance des Drucksensors, der selber sehr schnell ist, ist jedoch auch die Performance des zugeordneten Plausibilitätssensors, denn ohne einen Plausibilitätssensor ist der Einsatz eines Crashsensors nicht möglich, um Sicherheit über die übertragenen Signale des Crashsensors zu erhalten. Beschleunigungssensoren sind langsam im Vergleich zum Drucksensor. Folglich wird erfindungsgemäß vorgeschlagen, als Plausibilitätssensor einen Schalter zu verwenden, der im Gehäuse des Drucksensors angeordnet ist. Die Anordnung ist durch den Einbau des Schalters in das Gehäuse des Drucksensors realisiert. Der Schalter liefert ein einfach auszuwertendes Signal, ist er geschlossen oder nicht, und spart somit enorm an Bandbreite. Außerdem handelt es sich bei diesem Plausibilitätssensor um einen robusten und sehr schnellen Sensor.

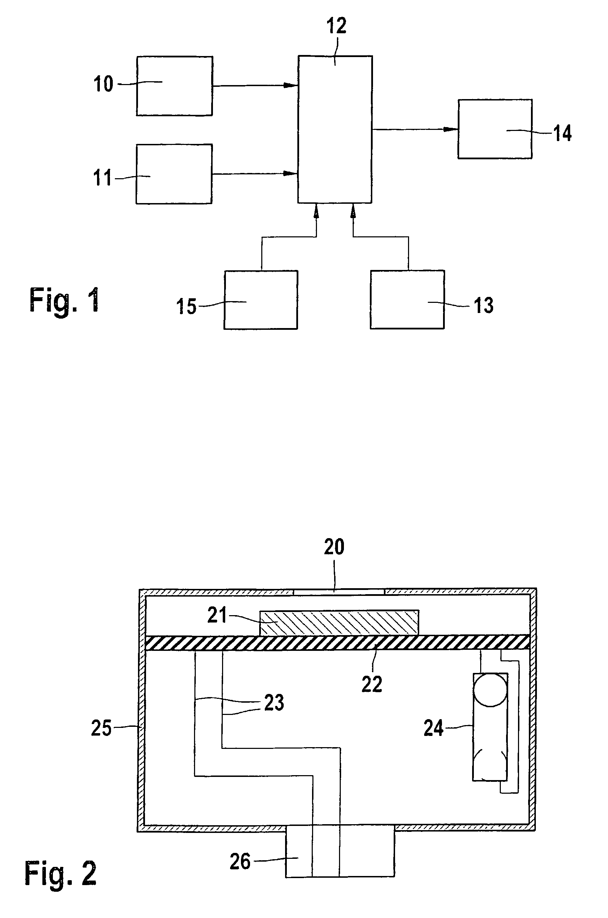

Figur 1 erläutert in einem ersten Blockschaltbild die erfindungsgemäße Vorrichtung. Ein Drucksensor 10, ein mechanischer Schalter 11 und ein Beschleunigungssensor 15 sind jeweils an Dateneingänge eines Steuergeräts 12 für Rückhaltemittel angeschlossen. Zu diesen Rückhaltemitteln gehören Airbags, Gurtstraffer, Überrollbügel usw. An einem vierten Dateneingang des Steuergeräts 12 ist eine weitere Sensorik 13 angeschlossen, die weitere Crash-, Unfall-, Innenraum- und Pre-Crash-Sensoren umfasst. Über einen Dateneingang ist das Airbagsteuergerät 12 an Rückhaltemittel 14 angeschlossen. Die Signale des Drucksensors 10, hier ist beispielhaft nur einer dargestellt, werden durch das Signal des mechanischen Schalters 11 bzw. des Beschleunigungssensors 15 plausibilisiert. Das Signal des Schalters 11 ist sehr schnell und wird deshalb die Signale des Drucksensors 10 in Bezug auf die Detektionszeit des Aufpralls kaum beeinträchtigen, während die Signale des Beschleunigungssensors 15 im Vergleich zu den Signalen des Drucksensors 10 erheblich später kommen und deshalb die Performance des Drucksensors 10 beeinträchtigen. Bei gewissen Crashtypen kann jedoch der Einsatz eines zusätzlichen Beschleunigungssensors 15 zur Plausibilisierung notwendig sein, beispielsweise bei solchen Crashes, die nicht direkt einen Seitenaufprall betreffen, sondern beispielsweise einen Offsetcrash. Das Steuergerät 12 steuert in Abhängigkeit von den Signalen der Sensoren 10, 11, 13 und 15 die Rückhaltemittel 14 an, wobei durch die Innenraumsensorik die entsprechenden Rückhaltemittel ausgewählt werden, wobei bei dieser Auswahl auch die Schwere des Crashes zum Tragen kommt. Handelt es sich um einen sehr leichten Aufprall, sind Gurtstraffer ausreichend, liegt ein schwerer Aufprall vor, sind auf jeden Fall Airbags einzusetzen, sofern die betreffende zu schützende Person dies ermöglicht. Handelt es sich um eine sehr leichte Person, ist der Einsatz von Airbags nicht angezeigt.

Figur 2 zeigt in einem Blockschaltbild den erfindungsgemäßen Drucksensor. Das Gehäuse des Drucksensors 25 weist eine Druckeinlassöffnung 20 auf. Diese wird von einem Sensorelement 21 genutzt, um den Druck in einem Seitenteil des Fahrzeugs zu messen. Die Auswerteelektronik 22 verstärkt, filtert und digitalisiert die Signale des Sensorselements 21, das hier eine Membran ist. Diese Signale werden dann über die Leitungen 23 und die Schnittstelle 26 zu einem Steuergerät übertragen. Bei dem Drucksensor ist hier nur eine unidirektionale Übertragung zum Steuergerät notwendig, so dass dann beispielsweise eine Stromschnittstelle verwendet werden kann, bei der ein Ruhestrom durch den Drucksensor und insbesondere die Schnittstelle 26 moduliert wird. An die Elektronik 22 ist noch ein Schalter 24 angeschlossen, der in Abhängigkeit von einem mechanischen Aufprall sich schließt. Ist dieser Aufprall so stark, dass es sich um einen Crash handeln kann, wird sich der Schalter 24 schließen und dieses Signal wird durch die Elektronik 22 über die Leitung 23 und die Schnittstelle 26 zum Airbagsteuergerät weitergeleitet. Dabei kann dieses Signal direkt dem Airbagsteuergerät und damit dem Prozessor zugeführt werden oder aber auch direkt der Zündendstufe, um diese bei einem Crashfall freizugeben. Die endgültige Freigabe der Crashstufe kann auch durch weitere Signale beeinflusst werden. Das Signal des mechanischen Schalters 24 kann auch dazu genutzt werden, um die Datenübertragung des Drucksensors zum Steuergerät zu unterbrechen, wenn der Schalter 24 geöffnet ist und somit keinen Aufprall anzeigt. Der mechanische Schalter 24 ist dabei derart konfiguriert, dass er nur für eine bestimmte Zeit bei einem Crash geschlossen bleibt und dann wieder in die geöffnete Stellung automatisch zurückspringt. Dies erfordert das Vorhandensein einer Federkraft oder anderer Techniken, die beispielsweise beim Hamlinschalter verwirklicht sind.

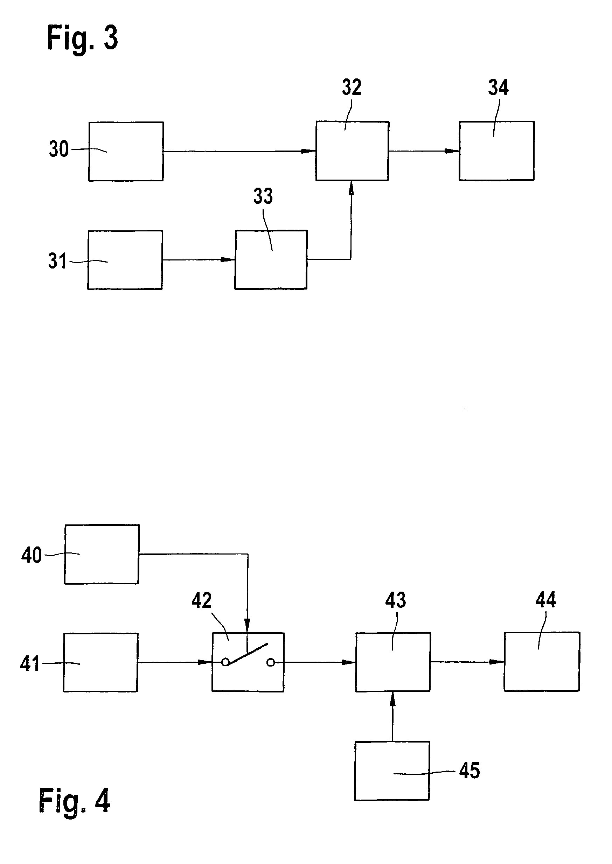

Figur 3 zeigt in einem Blockschaltbild die erfindungsgemäße Vorrichtung. Hier ist der mechanische Schalter 30 direkt mit der Zündendstufe 32 verbunden, an die die Rückhaltemittel 34 angeschlossen sind. Der Drucksensor 31 liefert jedoch seine Signale an einem Prozessor 33, der beispielsweise im Airbagsteuergerät angeordnet ist, der dann die Zündendstufe 32 auslöst. Die Auslösung erfolgt beispielsweise mit den sogenannten SPI (Serial Peripheral Interface) Bus durch entsprechende Zündbefehle.

Figur 4 zeigt ein weiteres Blockschaltbild der erfindungsgemäßen Vorrichtung. Der Drucksensor 41 ist an einen Schalter 42 angeschlossen. Dieser Schalter 42 wird durch den Schalter 40, der als Plausibilitätssensor wirkt, geschlossen. Dieses Schließen erfolgt lediglich, wenn der Schalter 40 einen Aufprall detektiert. Dann können die Daten des Drucksensors 41 zum Airbagsteuergerät 43 übertragen werden, so dass dieses die Signale des Drucksensors 41 auswertet. In Abhängigkeit davon und weiterer Sensorsignale von einer Sensorik 45 steuert das Steuergerät 43 die Rückhaltemittel 44 an.

## Patentansprüche

1. Vorrichtung zur Seitenaufprallerkennung mit einem Drucksensor (10, 31, 41), in einem Seitenteil eines Fahrzeugs und einem Plausibilitätssensor (11, 15, 24, 30, 40), der dem Gehäuse (25) des Drucksensors (10, 31, 41) zugeordnet ist, **dadurch gekennzeichnet, dass** der Plausibilitätssensor (11, 30, 40) als ein Schalter konfiguriert ist und dass der Schalter (24) im Gehäuse (25) angeordnet ist.

2. Vorrichtung nach Anspruch 1, **dadurch gekennzeichnet, dass** der Schalter (11, 24, 30, 40) ein Hamlinschalter ist.

3. Vorrichtung nach einem der vorherigen Ansprüche, **dadurch gekennzeichnet, dass** der Schalter (11, 24, 30, 40) unmittelbar mit einer Zündendstufe (32) derart verbunden ist, dass der Schalter (30) die Zündendstufe (32) in Abhängigkeit von seinem Zustand freigibt.

4. Vorrichtung nach einem der Ansprüche 1 oder 2, **dadurch gekennzeichnet, dass** ein Prozessor (43) in Abhängigkeit von einem Signal des Schalter (40) die Zündendstufe (32) freigibt.

5. Vorrichtung nach einem der vorherigen Ansprüche, **dadurch gekennzeichnet, dass** der Schalter (40) derart angeordnet ist, dass der Schalter (40) in Abhängigkeit von seinem Zustand eine Datenübertragung von dem Drucksensor (41) zum Prozessor (43) unterbricht.

6. Vorrichtung nach einem der vorhergehenden Ansprüche, **dadurch gekennzeichnet, dass** das Signal des Schalters (11, 24, 30, 40) unmittelbar mit dem Drucksignal codiert wird.

7. Drucksensor zur Seitenaufprallerkennung, **dadurch gekennzeichnet, dass** der Drucksensor in seinem Gehäuse (25) einen Beschleunigungsschalter (24) aufweist.

## Claims

1. Device for detecting side impacts, having a pressure sensor (10, 31, 41), in a side part of a vehicle and a plausibility sensor (11, 15, 24, 30, 40) which is assigned to the housing (25) of the pressure sensor (10, 31, 41), **characterized in that** the plausibility sensor (11, 30, 40) is configured as a switch, and **in that** the switch (24) is arranged in the housing (25).

2. Device according to Claim 1, **characterized in that** the switch (11, 24, 30, 40) is a Hamlin switch.

3. Device according to one of the preceding claims, **characterized in that** the switch (11, 24, 30, 40) is directly connected to a firing output stage (32) in such a way that the switch (30) enables the firing output stage (32) as a function of its state.

4. Device according to one of Claims 1 or 2, **characterized in that** a processor (43) enables the firing output stage (32) as a function of a signal of the switch (40).

5. Device according to one of the preceding claims, **characterized in that** the switch (40) is arranged in such a way that the switch (40) interrupts transmission of data from the pressure sensor (41) to the processor (43) as a function of its state.

6. Device according to one of the preceding claims, **characterized in that** the signal of the switch (11, 24, 30, 40) is encoded directly with the pressure signal.

7. Pressure sensor for detecting side impacts, **characterized in that** the pressure sensor has an acceleration switch (24) in its housing (25).

## Revendications

1. Dispositif de détection d'une collision latérale comprenant un capteur de pression (10, 31, 41), dans une partie latérale d'un véhicule, et un capteur de plausibilité (11, 15, 24, 30, 40) associé au boîtier (25) du capteur de pression (10, 31, 41),
**caractérisé en ce que**
le capteur de plausibilité (11, 30, 40) est un commutateur (24) disposé dans le boîtier (25).

2. Dispositif selon la revendication 1,
**caractérisé en ce que**
le commutateur (11, 24, 30, 40) est un commutateur de Hamlin.

3. Dispositif selon l'une quelconque des revendications précédentes,
**caractérisé en ce que**
le commutateur (11, 24, 30, 40) est directement relié à un étage de sortie d'allumage (32) de telle sorte que le commutateur (30) déclenche l'étage de sortie d'allumage (32) en fonction de son état.

4. Dispositif selon l'une quelconque des revendications 1 ou 2,
**caractérisé en ce qu'**
un processeur (43) déclenche l'étage de sortie d'allumage (32) en fonction d'un signal du commutateur (40).

5. Dispositif selon l'une quelconque des revendications précédentes,
**caractérisé en ce que**
le commutateur (40) est disposé pour interrompre en fonction de son état, une transmission de données entre le capteur de pression (41) et le processeur (43).

6. Dispositif selon l'une quelconque des revendications précédentes,
**caractérisé en ce que**
le signal du commutateur (11, 24, 30, 40) est directement codé avec le signal de pression.

7. Capteur de pression pour la détection d'une collision latérale,
**caractérisé en ce que**
le capteur de pression présente dans son boîtier (25), un commutateur d'accélération (24).
